# EUROPÄISCHE PATENTSCHRIFT

(11) **EP 1 128 114 B1**
(45) Veröffentlichungstag und Bekanntmachung des Hinweises auf die Patenterteilung: **28.03.2007**
(21) Anmeldenummer: 01250037.7
(22) Anmeldetag: 01.02.2001
(51) Int. Cl.: F16L 13/14

(54) **Rohrpressverbindung**
Press-fitting for pipes
Raccord à compression

(30) Priorität: 23.02.2000 DE 10009739
(43) Veröffentlichungstag der Anmeldung: 29.08.2001
(73) Patentinhaber: Geberit Mapress GmbH, 40764 Langenfeld (DE)
(72) Erfinder: Speckemeyer, Jens, Dipl.-Ing., 45475 Mülheim (DE)
(74) Vertreter: Meissner, Peter E.

(56) Entgegenhaltungen:
- WO-A-98/54500
- DE-A- 2 424 353
- DE-A- 19 544 161
- DE-U- 29 907 585
- MANNESMANN: "MANNESMANN PRESSFITTING-SYSTEM/SANITAER" ARBEITS- UND VERLEGERICHTLINIEN FUER ROHRE UND PRESSFITTINGS AUS NICHTROSTENDEN STAHL FUER DIE TRINKWASSERINSTALLATION, XX, XX, Bd. 94, Nr. 8, 1. August 1994 (1994-08-01), Seite PASSAGE XP002045959

## Beschreibung

Die Erfindung betrifft eine Rohrpressverbindung, bestehend aus einem Pressfittingelement und einem darin eingeschobenen Leitungsrohr gemäß dem Oberbegriff des Patentanspruches 1.

Das Pressfitting-System für die Hausinstallation aus Kohlenstoffstahl oder hochlegiertem Stahl sowie Kupfer ist bekannt (siehe Prospekt mapress mannesmann pressfitting-system, Lieferprogramm Sanitär, Heizung, September 1998, sowie mapress Kupfer 03/1999). Dieses System besteht im wesentlichen aus einem plastisch verformbaren Pressfittingelement, das je nach Ausbildung als Bogen- oder T-Stück oder Muffe oder Übergangsstück mindestens einen im Querschnitt wulstartig ausgebildeten, einen Dichtring aufnehmenden Bereich aufweist und daran sich ein in Längsrichtung erstreckender, zylindrisch ausgebildeter Bereich anschließt. Am Ende der Erstreckung dieses zylindrischen Bereiches ist eine radial nach innen sich erstreckende sickenförmige Vertiefung angepresst, die als Anschlag für das einschiebbare, glattendige Rohr dient. Mittels eines mindestens zwei Pressbacken aufweisenden Presswerkzeuges wird das wulstartige Ende plastisch und der eingeschlossene Dichtring elastisch verformt. Zusätzlich wird mit dem gleichen Pressvorgang im zylindrischen Bereich des Pressfittingelementes in unmittelbarer Nähe des wulstartigen Endes eine sickenförmige Vertiefung angepresst, die auch das darunter liegende eingeschobene Rohr mit erfasst. Der elastisch verformte Dichtring übernimmt bei diesem Verbindungssystem die Dichtfunktion, während die angepresste sickenförmige Vertiefung die durch den Innendruck entstehenden Längskräfte sowie einen Teil der Momente aufnimmt. Der Dichtring wird aus einem gummielastischen Werkstoff, wie z. B. Butylkautschuk meist in Form eines Runddichtringes hergestellt.

Diese Rohrpressverbindung mit einer Kombination aus einer plastischen Verformung der metallischen Elemente wie Pressfitting und Leitungsrohr und einer rein elastischen Verformung des eingelegten Dichtringes hat sich seit mehr als 20 Jahren in der Sanitär- und Heizungstechnik bewährt, da die Verpresstechnik gegenüber Löten und Schweißen sowie Gewindeverbindungen hinsichtlich der Montagezeit und Vermeidung von Brandgefahr von Vorteil ist. Nachteilig bei dieser Anordnung aber ist, daß bedingt durch das für den Dichtring verwendete Material der Einsatzbereich des Systems hinsichtlich der Temperaturen und / oder bezüglich der zu transportierenden Medien begrenzt ist. In der Vergangenheit hat es schon Versuche gegeben, den Einsatzbereich des Pressfitting-Systems zu erweitern. Beispielsweise ist in der DE 195 44 161 A1 offenbart, die Querschnittsgeometrie und / oder die Struktur des verwendeten Dichtringes so zu verändern, daß auch ein Einsatz bis zu einer Temperatur von 300° C möglich ist. Dabei wird statt eines Dichtringes aus Butylkautschuk einer auf Basis von Fluorpolymeren verwendet. Die praktischen Versuche blieben aber unbefriedigend, da die grundsätzliche Problematik des stark unterschiedlichen Ausdehnungskoeffizienten zwischen Kunststoff für den Dichtring und Metall für das Pressfittingelement zwar etwas verringert, aber nicht beseitigt werden konnte. Die Akzeptanz zu transportierender aggressiver Medien ist dabei nicht untersucht worden, so daß auch dieses Problemfeld weiterhin nicht gelöst ist.

Aufgabe der Erfindung ist es, eine Rohrpressverbindung anzugeben, die unter Beibehaltung der bewährten Verpresstechnik universell einsetzbar ist und mit der insbesondere höhere Temperaturen und / oder der Transport aggressiver Medien beherrschbar ist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung wird der Ringwulstbereich als eigenes Teil hergestellt, das stoff-, kraft- und / oder formschlüssig mit dem übrigen Pressfittingelement verbunden ist und es wird - unter Verzicht der Anordnung eines separaten Dichtmittels - zwischen Pressfittingelement und Leitungsrohr eine metallische Abdichtung gebildet.

Der Vorteil der vorgeschlagenen Anordnung ist darin zu sehen, daß durch gezielte Auswahl des Werkstoffes für das separat hergestellte Teil die erforderliche Abdichtung direkt ohne Anordnung eines separaten Dichtringes möglich ist. Auf diese Weise wird der Einsatzbereich des Systems hinsichtlich der Temperatur und / oder des Transportes aggressiver Medien durch den verwendeten Werkstoff für das Leitungsrohr und das Pressfittingelement allein bestimmt, da auf die Anordnung eines separaten Dichtmittels aus einem gummielastischen Werkstoff verzichtet wird. Erfindungswesentlich dabei ist, daß die als bisher unabdingbar geltende Kombination für Rohrpressverbindungen von metallischen Elementen (Pressfittingelement und Leitungsrohr) mit einem gummielastischen nichtmetallischen Element (Dichtmittel) verlassen wird und die dünnwandige Tülle zusammen mit dem Leitungsrohr nach dem Verpressen eine metallische Dichtung bildet und somit alle die mit dem zu transportierenden Medium in Berührung kommenden Teile der Rohrpressverbindung aus Metall sind. Für bestimmte Anwendungsfälle ist es von Vorteil, wenn der separat hergestellte Ringwulstbereich aus Kunststoff ist. Durch die metallische Tülle bleibt die metallische Abdichtung aber erhalten.

Die Separierung des Ringwulstes hat den Vorteil, daß der Werkstoff optimal für die Verpressung ausgewählt werden kann und damit unabhängig ist von der Wahl des Werkstoffes für das Leitungsrohr und den übrigen Bereich des Pressfittingelementes.

In der Zeichnung wird anhand eines Ausführungsbeispieles die erfindungsgemäß ausgebildete Rohrpressverbindung näher erläutert. Es zeigen:
- Figur 1: einen Längsschnitt eines Teilbereiches eines Pressfittingelementes
- Figur 2: im Querschnitt das Ringwulstelement als separates Teil
- Figur 3: im Längsschnitt eine Rohrverpressverbindung mit eingeschobenem Leitungsrohr und angesetztem Presswerkzeug

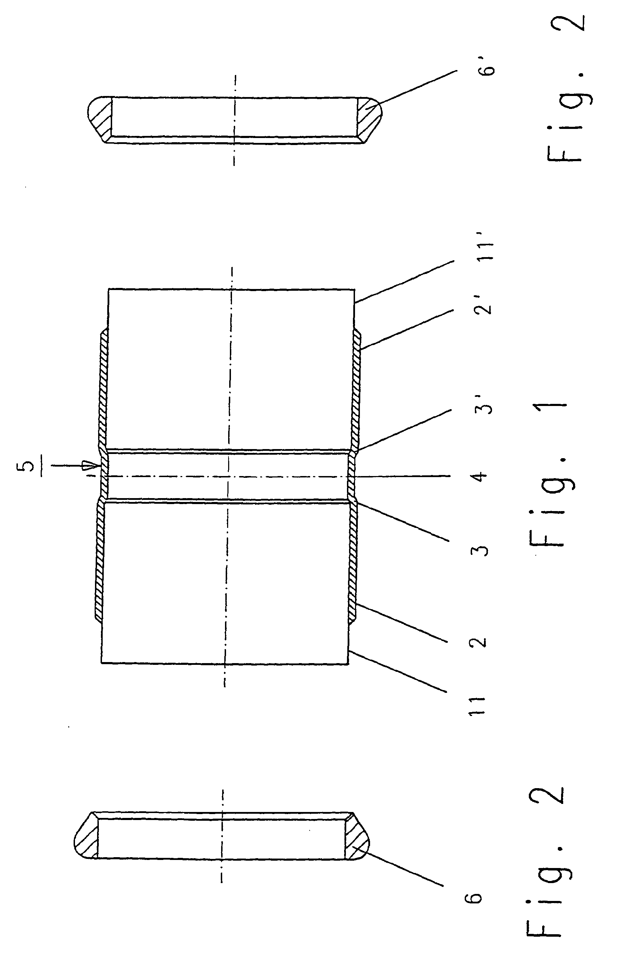

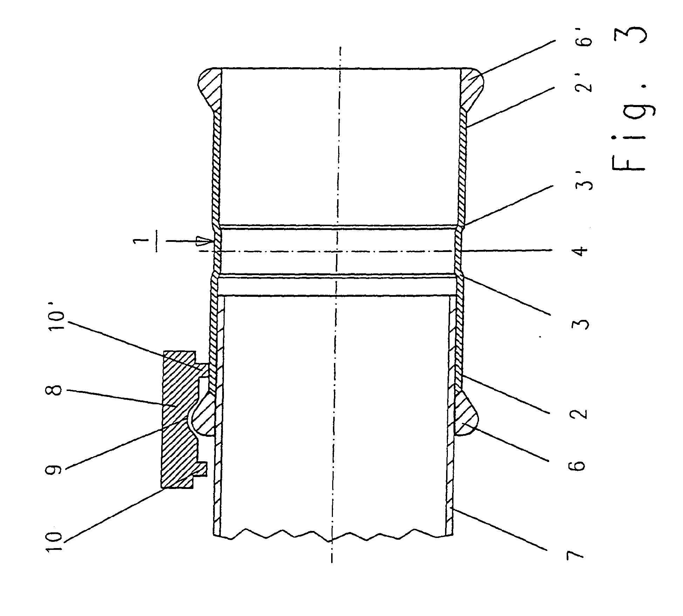

In Figur 1 ist in einem Längsschnitt ein Teilbereich eines als Muffe 1 (Figur 3) ausgebildeten metallischen Pressfittingelementes dargestellt. Es weist zwei zylindrisch ausgebildete Abschnitte 2, 2' auf, die mit einem Absatz 3, 3' übergehen in einen einen geringeren Innendurchmesser aufweisenden weiteren zylindrischen Abschnitt 4. An beiden Stirnseiten ist je eine dünnwandige Tülle 11, 11' vorgesehen, die eine Fortsetzung des jeweiligen zylindrisch ausgebildeten Abschnittes 2 bzw. 2' bildet. Das metallische Pressfittingelementteil 5 kann z. B. ausgehend von einem nahtlosen oder geschweißten Rohr aus Kohlenstoffstahl, hochlegiertem Stahl oder Kupfer hergestellt sein.

Figur 2 zeigt ebenfalls im Längsschnitt einen Ringwulstelement 6, 6', das andere Eigenschaften aufweist als das Pressfittingelementteil 5. Die anderen Eigenschaften werden vorzugsweise durch einen anderen Werkstoff realisiert, beispielsweise Kupfer oder Kunststoff. Im Unterschied zum bekannten Pressfitting ist das Ringwulstelement 6, 6' nicht zur Aufnahme eines separaten Dichtringes geeignet.

Figur 3 zeigt das als Muffe 1 ausgebildete Pressfittingelement. Die Verbindung des Pressfittingelementteiles 5 mit den beiden Ringwulstelementen 6,6' erfolgt vorzugsweise stoffschlüssig, d. h. alternativ über Schweißen, Löten oder Kleben, wobei zuvor das jeweilige Ringwulstelement 6 bzw. 6' auf die jeweilige Tülle 11 bzw. 11' aufgeschoben worden ist. Die Verbindung kann aber eben so gut auch über einen Reib- und / oder Formschluss erfolgen. Das eingeschobene metallische Leitungsrohr 7 kommt in bekannter Weise beim Einschieben in die Muffe 1 am Absatz 3 zur Anlage. Danach werden mindestens zwei Pressbacken 8 (hier nur eine dargestellt) eines nicht näher dargestellten Presswerkzeuges angesetzt und mittels der Ausnehmung 9 und des Presssteges 10' die Muffe 1 plastisch verformt. Die Verformung des Ringwulstelementes 6 führt zu einem Aufpressen der Tülle 11 auf das darunter liegende Leitungsrohr 7, so dass unter Verzicht der Anordnung eines separaten Dichtmittels eine metallische Dichtung gebildet wird. Die Verformung des zylindrischen Abschnittes 2 bildet zusammen mit dem eingeschobenen Leitungsrohr 7 die axiale Sicherung.

## Patentansprüche

1. Rohrpressverbindung, bestehend aus einem metallischen Pressfittingelement (5), das mindestens einen im Querschnitt wulstartig ausgebildeten, dichtenden Bereich und einen daran anschließenden, der Einschubseite abgewandten zylindrisch ausgebildeten Bereich (2,2') aufweist, der einen Anschlag bildend in einen daran anschließenden zylindrisch ausgebildeten und einen geringeren Innendurchmesser aufweisenden Abschnitt (4) übergeht und einem dünnwandigen metallischen Leitungsrohr (7), dessen glattendiger Endbereich nach dem Einschub in das Pressfittingelement am inneren Anschlag des Pressfittingelementes zur Anlage kommt, wobei mittels eines das Pressfittingelement umfassenden, mindestens zwei Pressbacken aufweisenden Presswerkzeuges nach dem Ansetzen und Schließen eine unlösbare, dichte Rohrpressverbindung gebildet wird, wobei während des Verpressens die Pressbacken sowohl auf den Ringwulst einschließlich des dichtenden Bereiches, als auch auf den der Einschubseite abgewandten, zylindrisch ausgebildeten Abschnitt des Pressfittingelementes einwirken,
**dadurch gekennzeichnet,**
**dass** der Ringwulstbereich (6,6') als eigenes Teil hergestellt wird, das stoff-, kraft- und / oder formschlüssig mit dem übrigen Pressfittingelement (5) verbunden ist und dass zwischen Pressfittingelement (5) und Leitungsrohr (7) eine metallische Abdichtung gebildet wird, wobei
das Pressfittingelement (5) stirnseitig eine zur Aufnahme des separaten Ringwulstbereiches (6,6') geeignete dünnwandige Tülle (11,11') aufweist, die nach dem Verpressen mit dem Leitungsrohr (7) in Kontakt kommt.

2. Rohrpressverbindung nach Anspruch 1,
**dadurch gekennzeichnet,**
**dass** das separate Teil (6,6') aus Metall ist.

3. Rohrpressverbindung nach Anspruch 1,
**dadurch gekennzeichnet,**
**dass** das separate Teil (6,6') aus Kunststoff ist.

## Claims

1. Press fitting for pipes, consisting of a metallic press fitting element (5) which has at least one sealing area that is shaped like a bead in cross-section, and an area (2, 2') adjoining this that is cylindrical in shape and that faces away from the insertion side, and that changes, while forming a limit stop, into an adjoining section (4) that is cylindrical in shape and that has a smaller internal diameter, and of a thin-walled metallic pipe (7), the smooth end area of which comes up against the inside limit stop of the press fitting element after being inserted into the press fitting element, whereby a non-detachable sealed pipe press joint is formed by applying and closing a pressing tool that encircles the press fitting element and that has at least two cheek plates, whereby, during the pressing process, the cheek plates act both on the ring-shaped bead including the sealing area and on the cylindrical section of the press fitting element that faces away from the insertion side,
**characterised in that**
the ring-shaped bead area (6, 6') is manufactured as a separate component which is joined to the rest of the press fitting element (5) material-to-material, non-positively and / or by positive locking, and **in that** a metallic seal is formed between the press fitting element (5) and the pipe (7), whereby
the press fitting element (5) has, at the front, a thin-walled socket (11, 11') that is suitable for accepting the separate ring-shaped bead area (6, 6'), which socket comes into contact with the pipe (7) after the pressing process.

2. Press fitting for pipes as in claim 1,
**characterised in that**
the separate component (6, 6') is made of metal.

3. Press fitting for pipes as in claim 1,
**characterised in that**
the separate component (6, 6') is made of plastic.

## Revendications

1. Raccord à compression tubulaire composé d'un élément de raccord à compression métallique (5) qui présente au moins une zone d'étanchéité réalisée en forme de bourrelet dans sa section transversale et une zone (2, 2') la prolongeant, réalisée cylindrique et orientée à l'opposé du côté d'insertion, laquelle zone, en formant une butée, se transforme en un segment (4) la prolongeant, présentant un diamètre intérieur plus faible et réalisé cylindrique, et composé d'un tube de conduite (7) métallique à paroi mince dont la zone d'extrémité lisse, après insertion dans l'élément de raccord à compression, vient s'appuyer contre la butée intérieure de l'élément de raccord à compression, un raccord à compression étanche et inamovible étant formé au moyen d'un outil de compression présentant au moins deux mâchoires de compression et enserrant l'élément de raccord à compression, après application et fermeture, les mâchoires de compression agissant pendant la compression aussi bien sur le bourrelet annulaire comprenant la zone d'étanchéité que sur le segment de l'élément de raccord à compression réalisé cylindrique orienté à l'opposé du côté d'insertion,
**caractérisé en ce que** la zone en bourrelet annulaire (6, 6') est fabriquée en tant qu'élément en soi qui est relié au reste de l'élément de raccord à compression (5) par correspondance de matière, par adhérence et/ou par correspondance de forme et **en ce qu'**il est formé une étanchéité métallique entre l'élément de raccord à compression (5) et le tube de conduite (7), l'élément de raccord à compression (5) présentant du côté frontal une douille (11, 11') à paroi mince convenant pour la réception de la zone en bourrelet annulaire (6, 6') séparée, laquelle douille entre en contact avec le tube de conduite (7) après la compression.

2. Raccord à compression selon la revendication 1,
**caractérisé en ce que** l'élément séparé (6, 6') est en métal.

3. Raccord à compression selon la revendication 1,
**caractérisé en ce que** l'élément séparé (6, 6') est en plastique.
